# EUROPÄISCHE PATENTSCHRIFT

(11) **EP 0 866 413 B1**
(45) Veröffentlichungstag und Bekanntmachung des Hinweises auf die Patenterteilung: **17.08.2005**
(21) Anmeldenummer: 97119387.5
(22) Anmeldetag: 06.11.1997
(51) Int. Cl.: G06K 7/00

(54) **Adapter für die Kontaktierung von kartenförmigen Trägerelementen**
Adapter for contacting card-shaped carriers
Adaptateur pour le contact de porteurs au format carte

(30) Priorität: 19.03.1997 DE 29704984 U
(43) Veröffentlichungstag der Anmeldung: 23.09.1998
(73) Patentinhaber: STOCKO Contact GmbH & Co. KG, 42327 Wuppertal (DE)
(72) Erfinder: Klatt, Dieter, 42489 Wülfrath (DE); Pelke, Bernhard, 42119 Wuppertal (DE)
(74) Vertreter: Stenger, Watzke & Ring Patentanwälte

(56) Entgegenhaltungen:
- EP-A- 0 704 813
- WO-A-96/42063
- DE-A- 19 529 949
- DE-U- 9 103 928
- DE-U- 29 505 678
- DE-U- 29 607 253

## Beschreibung

Die Erfindung betrifft einen Adapter für die Kontaktierung von kartenförmigen Trägerelementen elektronischer Bauteile mit den Merkmalen des Oberbegriffs des Anspruchs 1. Ein derartiger Adapter ist beispielsweise aus der WO 96/42 063 bekannt, gegen die der Hauptanspruch abgegrenzt wurde.

Im Rahmen zunehmender Miniaturisierung im Bereich der Computertechnologie werden elektronische Bauteile im Hinblick auf Variabilität und Transportabilität immer öfter auf oder in kartenförmigen Trägerelementen angeordnet. Häufig anzutreffen sind Trägerelemente nach der sogenannten PCMCIA-Norm, bei denen es sich um Karten handelt, die ein normgemäßes matrixartiges Anschlußkontaktfeld aufweisen und je nach Verwendungszweck die unterschiedlichsten elektronischen Bauteile aufnehmen können. So finden derartige Karten beispielsweise als Speichererweiterungskarten, Laufwerkskarten, Modemkarten und dgl. eine Verwendung. Der Anschluß an ein Datenverarbeitungssystem erfolgt über die PCMCIA-Steckanschlußbuchse, die mit einem PCMCIA-Steckplatz des Datenverarbeitungssystems eine mechanische und elektrische Kontaktierung bewirkt.

Weit verbreitet sind auch sogenannte Chip-Karten, die über einen IC-Schaltkreis verfügen und flächig angeordnete Kontaktfelder für die Kontaktierung mit beispielsweise entsprechend ausgebildeten Leseeinheiten aufweisen. Bekannte Anwendungsgebiete für Chip-Karten sind derzeit Telefonkarten, Autorisierungskarten oder sogenannte Chargekarten.

Im Stand der Technik sind Adaptersysteme bekannt, die es ermöglichen, eine Chip-Karte an einen nach PCMCIA-Standard genormten Anschluß eines Datenverarbeitungssystemes anzuschließen. Zu diesem Zweck sind PCMCIA-Karten bekannt, die mit einer Ausnehmung für eine Chip-Karte versehen sind, wobei im Bereich der Ausnehmung an die freiliegende Oberfläche ein Feld von Kontaktelementen für die elektronischen Bauteile der Chip-Karte angeordnet ist. Durch Auflegen der Chip-Karte auf die PCMCIA-Karte ist damit ein Anschluß der Chip-Karte an einen nach PCMCIA-Standard genormten Anschluß eines Datenverarbeitungssystemes möglich. Als Nachteil erweist sich, daß die Kontaktelemente der PCMCIA-Karte bei nicht aufgelegter Chip-Karte ungeschützt freiliegen, und daß aufgrund der mangelnden Führung der Chip-Karte eine sichere Kontaktierung nicht gewährleistet werden kann.

Aus der DE 43 10 517 A1 ist weiterhin bekannt, den dem PCMCIA-Anschlußfeld gegenüberliegenden Bereich so zu vergrößern, daß ein Führungsschlitz für eine Chip-Karte ausgebildet werden kann. Durch diesen Vorschlag kann jedoch nicht sichergestellt werden, daß die Chip-Karte aus der Führungsebene seitlich oder nach oben herauskippt. Soweit auch innere Führungsplatten vorgeschlagen werden, ist ein Anstoßen der Chip-Karte beim Einschieben gegen diese Plattenelemente nicht zu vermeiden, was einer sicheren Kontaktierung und einem langlebigem Betrieb entgegensteht.

Der Erfindung liegt die **Aufgabe** zugrunde, einen Adapter der gattungsgemäßen Art dahingehend weiterzubilden, daß unter Vermeidung der beschriebenen Nachteile sich bei genauer und sicherer Führung eine einfache und bequeme Handhabung eines kartenförmigen Trägerelementes ergibt.

Die Aufgabe ist bei einem Adapter mit den Merkmalen des Oberbegriffs des Anspruchs 1 erfindungsgemäß durch die Merkmale des kennzeichnenden Teils des Anspruchs 1 **gelöst.**

Durch eine solche erfindungsgemäße Ausgestaltung ist eine exakte Positionierung eines kartenförmigen Trägerelementes, beispielsweise einer Chipkarte, gewährleistet, indem beidseitige Anlage- und Führungsflächen für die Karte vorhanden sind. Zudem ist durch die offene Gestaltung des Außengehäuses im Einführbereich sowie an der gegenüberliegenden Längsseite ein bequemes Einschieben einer Karte sichergestellt, weil diese nicht nur axial, sondern auch leicht versetzt dem Adapter zugeführt werden kann. Durch die geschlossene Seite im Einführbereich wird eine Karte auch bei schräger Einschubrichtung in eine axiale Position gebracht, um im Anschluß daran sowohl durch die geschlossene Längsseite des Außengehäuses als auch in der Flächenebene definiert geführt und somit sicher kontaktiert werden zu können.

In einer bevorzugten Ausführungsform ist die Unterseite des Außengehäuses im Einführbereich des kartenförmigen Trägerelementes nach Art einer Unterlippe freigelegt oder hervorgezogen, so daß durch den dadurch gebildeten Vorsprung ein Aufsetzen und damit eine bessere Einführung einer Karte gegeben ist. Um ein Herausrutschen eines eingeführten Trägerelementes zu vermeiden und somit die Betriebssicherheit zu erhöhen, wird vorgeschlagen, daß auf der freiliegenden Unterlippe wenigstens ein Klemmnocken angeordnet ist.

Gemäß einem weiteren Merkmal der Erfindung ist die Unter- und/oder Oberseite des Außengehäuses im Bereich der Steckanschlußbuchse mit einer Kröpfung versehen. Dies bietet den Vorteil, daß die durch die Kröpfung gebildete Schräge eine eingeschobene Karte zu den Kontaktelementen der Leiterplatte hin drückt, so daß die Kontaktiersicherheit dadurch erheblich erhöht wird.

Bei einer weiteren vorteilhaften Ausgestaltung der Erfindung weist das Außengehäuse an seiner dem offenen Bereich gegenüberliegenden Längsseite eine seitliche Erweiterung auf, um einen sicheren Sitz des Adapters an einem Notebook oder dgl. sicherzustellen. Zu diesem Zweck wird weiterhin vorgeschlagen, daß die in Längsrichtung des Außengehäuses sich erstreckende Ausdehnung der seitlichen Erweiterung von der den Einschubkanal aufweisenden Stirnseite an bis auf Höhe des dem Einschubkanal zugewandten stirnseitigen Endes der gegenüberliegenden geschlossenen Längsseite reichend ausgebildet ist. Dies bietet den Vorteil, daß der die erleichterte Einführung eines Trägerelementes ermöglichende offene Bereich des Außengehäuses bei in einem Notebook oder dgl. eingeführten Adapter außerhalb des Notebookgehäuses zu liegen kommt.

Zweckmäßigerweise ist die Öffnung sich von der seitlichen Erweiterung an bis zu der Kröpfung hin erstreckend angeordnet, so daß ein eingeschobenes Trägerelement an dieser Seite weitestgehend von außen sichtbar ist, um beispielsweise eine optische Kontrolle des ordnungsgemäßen Sitzes des Trägerelementes zu erlangen. Vorzugsweise ist die Öffnung bis an die obere Längskante der Unterseite des Außengehäuses heranreichend ausgebildet, um ein Anstoßen eines einzuführenden Trägerelementes gegen beispielsweise eine von der Unterseite nach oben abstehende Längskante zu verhindern.

Schließlich wird vorgeschlagen, daß die Öffnung eine Höhe aufweist, die der des Einschubkanales entspricht, um eine optimale Raumausnutzung innerhalb des Adaptergehäuses für die auf der Leiterplatte befindlichen elektronischen Bauteile zu erzielen. Zu diesem Zweck wird ferner vorgeschlagen, daß der Einschubkanal bündig mit der oberen Kante der Unterseite des Außengehäuses angeordnet ist.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform dargestellt ist, und zwar zeigen:
- Fig. 1: einen Adapter und eine Chip-Karte in einer perspektivischen Ansicht;
- Fig. 2: den Adapter mit teilweise eingeschobener Chip-Karte in einer schematischen Schnittdarstellung und
- Fig. 3: den Adapter mit einer seitlich versetzt eingeführten Chip-Karte in einer perspektivischen Ansicht.

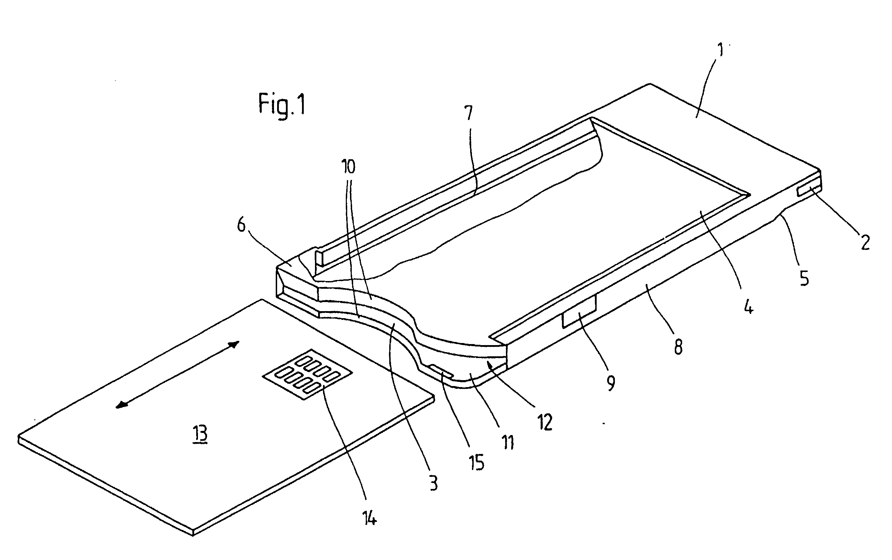

Der in Fig. 1 dargestellte Adapter weist ein Außengehäuse 1 auf, dessen Abmessungen denen einer PCMCIA-Karte z.B. vom Typ II entsprechen. Das Außengehäuse 1 weist an einer schmäleren Stirnseite eine PCMCIA-Steckanschlußbuchse 2 und an der gegenüberliegenden Stirnseite die Öffnung eines Einschubkanals 3 auf. Die Oberseite des Außengehäuses 1 ist mit einer leichten Erhöhung 4 versehen, während an der Unterseite des Außengehäuses 1 im Bereich der PCMCIA-Steckanschlußbuchse 2 eine Kröpfung 5 ausgebildet ist. Wie Fig. 1 weiter zu entnehmen ist, weist die in der Zeichnung linke Längsseite des Außengehäuses 1 im Anschluß an eine seitliche Erweiterung 6 eine Öffnung 7 auf. Demgegenüber ist die der Öffnung 7 parallel gegenüberliegende, in der Zeichnung rechte Längsseite 8 bis auf eine für eine Plug-in-Karte vorgesehene Öffnung 9 geschlossen. An der den Einschubkanal 3 aufweisenden Stirnseite des Außengehäuses 1 ist mittig eine Eingriffsmulde 10 ausgebildet, die an der Unterseite des Außengehäuses 1 in eine hervorgezogene bzw. freigelegte Unterlippe 11 übergeht, so daß sich ein der geschlossenen seitlichen Erweiterung 6 gegenüberliegender offener Bereich 12 des Außengehäuses 1 ergibt.

Eine in Fig. 1 ebenfalls gezeigte Chip-Karte 13 weist ein flächiges Kontaktfeld 14 auf und läßt sich in Richtung des gezeigten Doppelpfeiles über einen an der hervorgezogenen Unterlippe 11 des Außengehäuses 1 angeformten Klemmnocken 15 in das Außengehäuse 1 einführen bzw. herausziehen.

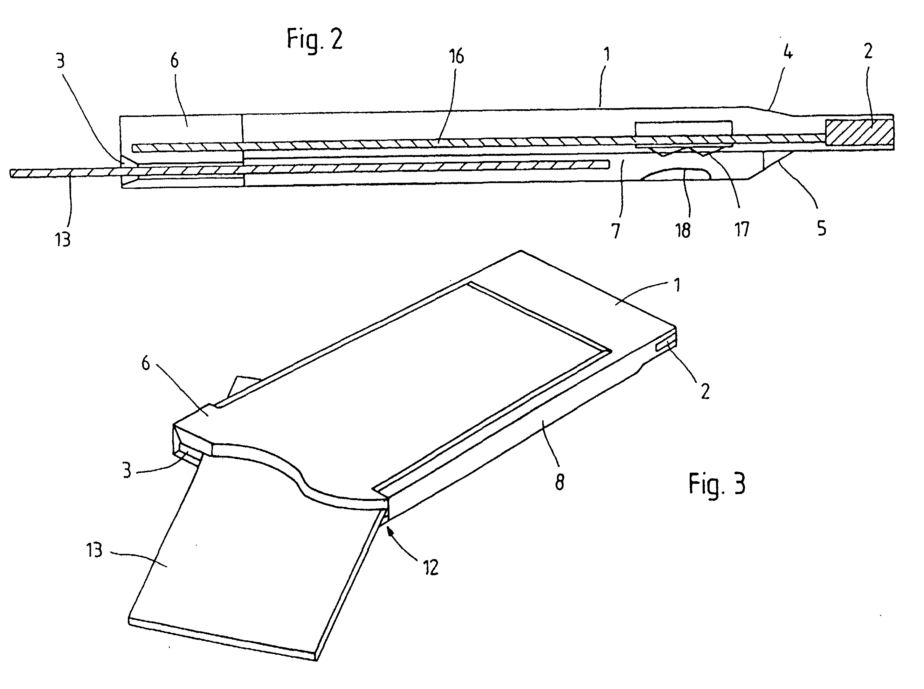

Im Inneren des Außengehäuses 1 ist eine mit der PCMCIA-Steckanschlußbuchse 2 über Lötverbindungen verbundene Leiterplatte 16 planparallel zur einzuführenden Chip-Karte 13 angeordnet, wie in Fig. 2 dargestellt ist. Die Leiterplatte 16 ist einseitig bzw. beidseitig mit elektronischen Bauteilen bestückt, so daß bei unveränderten Außenabmessungen des Adapters eine optimale Anpassung der verwendeten Elektronik für die unterschiedlichsten Anwendungszwecke ermöglicht wird. Zudem weist die Leiterplatte 16 Kontaktelemente 17 für die Kontaktierung des Kontaktfeldes 14 der Chip-Karte 13 auf. Aufgrund der Kröpfung 5 im Bereich der PCMCIA-Steckanschlußbuchse 2 ergibt sich eine Auflaufschräge für die eingeführte Chip-Karte 13, so daß das Kontaktfeld 14 der Chip-Karte 13 an die Kontaktelemente 17 der Leiterplatte 16 herangedrückt wird, wenn die Chip-Karte 13 voll in den Adapter eingeschoben ist. Über Andruckfedern 18, die in etwa den Kontaktelementen 17 der Leiterplatte 16 gegenüberliegen, wird ein zusätzliches Andrücken der Chip-Karte im Kontaktierbereich bewirkt, so daß eine sichere Kontaktierung der Chip-Karte 13 im Adapter sichergestellt ist. Um eine statische Aufladung von der Kartenoberfläche noch vor der Kontaktierung abzuleiten, sind die Andruckfedern 18 elektrisch kontaktierbar ausgebildet. Darüber hinaus wird durch den an der hervorgezogenen bzw. freigeschnittenen Unterlippe 11 angeformten Klemmnocken 15 eine Einklemmung der Chip-Karte 13 im eingeschobenen Zustand erzielt, so daß selbst bei auftretenden Vibrationen, die bei einem portablen Notebook alltäglich sind, ein Schutz der Chip-Karte 13 gegen Herausrutschen gewährleistet ist.

Bei dem in den Figuren 1 und 2 gezeigten Ausführungsbeispiel ist ein zweiter Einschubbereich in Form der Öffnung 9 für eine sogenannte Plug-in-Karte vorgesehen. Durch diese optionale Gestaltung ist es somit möglich, gleichzeitig zwei Chip-Karten einzuführen, von denen beispielsweise eine als Autorisierungskarte für die andere fungiert. Alternativ können auch zwei Chip-Karten gleichzeitig in einen dann entsprechend ausgebildeten Einschubkanal 3 eingeführt und mit entsprechenden Kontaktelementen 17 kontaktiert werden, so daß die Autorisierungskarte von gleicher Gestalt und Größe wie die andere Chip-Karte sein kann.

Durch die erfindungsgemäße Ausgestaltung des Einführbereiches des Außengehäuses 1 mit einem offenen Bereich 12 auf der einen Seite und einer diesem gegenüberliegenden geschlossenen seitlichen Erweiterung 6 auf der anderen Seite ist eine einfache und bequeme Einführung der Chip-Karte 13 in das Außengehäuse 1 gegeben, da die Chip-Karte 13 nicht nur streng axial wie bei herkömmlichen Adaptern, sondern auch leicht versetzt eingeschoben werden kann, wie insbesondere Fig. 3 zu entnehmen ist. Die in der Längsseite des Außengehäuses 1 ausgebildete Öffnung 7 erlaubt ein Durchragen der Chip-Karte 13, wohingegen die geschlossen ausgebildete seitliche Erweiterung 6 eine seitliche Führung darstellt. Um die versetzte Chip-Karte 13 vollständig in das Außengehäuse 1 einzuschieben, ist es dann nur noch erforderlich, diese an die geschlossene Längsseite 8 des Außengehäuses 1 zu drücken, die von da an als Anlagefläche für die Chip-Karte 13 dient.

Durch die hervorgezogene bzw. freigelassene Unterlippe 11 ist zudem ein Ansetzen der Chip-Karte 13 an den Adapter schräg von oben möglich, so daß sich auch eine besonders schnelle Einführung der Chip-Karte 13 in den Adapter erzielen läßt.

Die geschlossene Längsseite 8 des Außengehäuses 1 verleiht dem Adapter neben einer sicheren Führung der einzuschiebenden Chip-Karte 13 zusätzlich auch eine hohe Stabilität. Indem durch den offenen Bereich 12 die bei herkömmlichen Adaptern vorhandene seitliche Erweiterung auf dieser Seite wegfällt, entsteht bei eingesetztem Adapter, beispielsweise in ein Notebook, ein geringer Freiraum gegenüber dem Notebookgehäuse, so daß sich ein einfacheres Lösen des eingesetzten Adapters erreichen läßt. Beim vorliegenden Ausführungsbeispiel sind der offene Bereich 12 und die geschlossene Längsseite 8 rechts und die geschlossene seitliche Erweiterung 6 und die mit der Öffnung 7 versehene Längsseite des Außengehäuses 1 links in der Zeichnung angeordnet, was jedoch auch umgekehrt sein kann. Ebenso ist es möglich, das Außengehäuse 1 anstelle einteilig, wie beim vorliegenden Ausführungsbeispiel, auch zweiteilig auszubilden, indem die Ober- und Unterseiten des Außengehäuses 1 als entsprechend geformte Abdeckelemente ausgebildet sind.

### Bezugszeichenliste

- 1: Außengehäuse
- 2: PCMCIA-Steckanschlußbuchse
- 3: Einschubkanal
- 4: Erhöhung
- 5: Kröpfung
- 6: seitliche Erweiterung
- 7: Öffnung
- 8: geschlossene Längsseite
- 9: Öffnung
- 10: Eingriffsmulde
- 11: Unterlippe
- 12: offener Bereich
- 13: Chip-Karte
- 14: Kontaktfeld
- 15: Klemmnocken
- 16: Leiterplatte
- 17: Kontaktelemente
- 18: Andruckfedern

## Patentansprüche

1. Adapter für die Kontaktierung von kartenförmigen Trägerelementen elektronischer Bauteile, wobei der Adapter einen Anschluss für ein Datenverarbeitungssystem enthält und aus einem steckkartenförmigen Außengehäuse (1) besteht, das an einer ersten Stirnseite eine Steckanschlussbuchse (2) und an der gegenüberliegenden zweiten Stirnseite die Öffnung eines Einschubkanals (3) für die Aufnahme eines kartenförmigen Trägerelementes (13) aufweist,
wobei in dem Außengehäuse (1) eine mit der Steckanschlussbuchse (2) elektrisch verbundene Leiterplatte (16) angeordnet ist, die mit Kontaktelementen (17) zur Kontaktierung der elektronischen Bauteile des Trägerelementes (13) versehen ist,
wobei das Außengehäuse (1)in einem kurzen, sich an die die Öffnung des Einschubkanals (3) aufweisende erste Stirnseite anschließenden Bereich (12) an einer seiner beiden Längsseiten offen gestaltet ist, und
wobei die dieser Längsseite gegenüberliegende andere Längsseite des Außengehäuses (1) mit einer Öffnung (7) versehen ist, durch welche das Trägerelement (13) bei einer schrägen Einführung des Trägerelementes (13) in den Einschubkanal (3) ragen kann,
**dadurch gekennzeichnet,**
**dass** die beiden Längsseiten des Außengehäuses (1) Anlage- und Führungsflächen für das Trägerelement (13) bereitstellen.

2. Adapter nach Anspruch 1, **dadurch gekennzeichnet, dass** der Anschluss für das Datenverarbeitungssystem nach PCMCIA-Standard ausgelegt ist.

3. Adapter nach Anspruch 1 oder Anspruch 2, **dadurch gekennzeichnet, dass** die Unterseite des Außengehäuses (1) im Einführbereich des kartenförmigen Trägerelementes (13) nach Art einer Unterlippe (11) freigelegt oder hervorgezogen ist.

4. Adapter nach Anspruch 3, **dadurch gekennzeichnet, dass** auf der freiliegenden Unterlippe (11) wenigstens ein Klemmnocken (15) angeordnet ist.

5. Adapter nach einem der Ansprüche 1 bis 4, **dadurch gekennzeichnet, dass** die Unter- und/oder Oberseite des Außengehäuses (1) im Bereich der Steckanschlussbuchse (2) mit einer Kröpfung (5) versehen ist.

6. Adapter nach einem der Ansprüche 1 bis 5, **dadurch gekennzeichnet, dass** das Außengehäuse (1) an seiner dem offenen Bereich (12) gegenüberliegenden Längsseite eine seitliche Erweiterung (6) aufweist.

7. Adapter nach Anspruch 6, **dadurch gekennzeichnet, dass** die in Längsrichtung des Außengehäuses (1) sich erstreckende Ausdehnung der seitlichen Erweiterung (6) von der die Öffnung des Einschubkanals (3) aufweisenden Stirnseite an bis auf Höhe des dem Einschubkanal (3) zugewandten stirnseitigen Endes der gegenüberliegenden geschlossenen Längsseite (8) reichend ausgebildet ist.

8. Adapter nach einem der Ansprüche 5 bis 7, **dadurch gekennzeichnet, dass** die Öffnung (7) sich von der seitlichen Erweiterung (6) an bis zur der Kröpfung (5) hin erstreckend angeordnet ist.

9. Adapter nach einem der Ansprüche 1 bis 8, **dadurch gekennzeichnet, dass** die Öffnung (7) bis an die obere Längskante der Unterseite des Außengehäuses (1) heranreichend ausgebildet ist.

10. Adapter nach einem der Ansprüche 1 bis 9, **dadurch gekennzeichnet, dass** die Öffnung (7) eine Höhe aufweist, die der des Einschubkanales (3) entspricht.

11. Adapter nach einem der Ansprüche 1 bis 10, **dadurch gekennzeichnet, dass** der Einschubkanal (3) bündig mit der oberen Kante der Unterseite des Außengehäuses (1) angeordnet ist.

## Claims

1. Adapter for contacting card-shaped carrier elements of electronic components, wherein the adapter contains a connection for a data processing system and comprises an external housing (1) in the shape of a slot-in card which has on a first end face a slot-in connection socket (2) and has on the parallel second end face the opening of an insertion channel (3) for receiving a card-shaped carrier element (13),
wherein a printed circuit board (16) which is electrically connected to the slot-in connection socket (2) and is provided with contact elements (17) for contacting the electronic components of the carrier element (13) is disposed within the external housing (1),
wherein the external housing (1) is designed so that it is open on one of its two long sides in a short region (12) adjoining the first end face which has the opening of the insertion channel (3) of the first end face, and
wherein the other long side lying opposite the said long side of the external housing (1) is provided with an opening (7) through which the carrier element (13) can project when the carrier element (13) is inserted obliquely into the insertion channel (3),
**characterised in that** both long sides of the external housing (1) provide contact surfaces and guide surfaces for the carrier element (13).

2. Adapter as claimed in Claim 1, **characterised in that** the connection for the data processing system is designed to comply with the PCMCIA standard.

3. Adapter as claimed in Claim 1 or Claim 2, **characterised in that** the underside of the external housing (1) in the insertion region of the card-shaped carrier element (13) is exposed or projects in the manner of a lower lip (11).

4. Adapter as claimed in Claim 3, **characterised in that** at least one clamping projection (15) is disposed on the exposed lower lip (11).

5. Adapter as claimed in any one of Claims 1 to 4, **characterised in that** the lower and/or upper face of the external housing (1) is provided with a shoulder (5) in the region of the slot-in connection socket (2).

6. Adapter as claimed in any one of Claims 1 to 5, **characterised in that** the external housing (1) has a lateral widened portion (6) on its long side lying opposite the open region (12).

7. Adapter as claimed in Claim 6, **characterised in that** the extent in the longitudinal direction of the external housing (1) of the lateral widened portion (6) of the end face having the insertion channel (3) is constructed to reach the height of the front end of the opposing closed long side (8) facing the insertion channel (3).

8. Adapter as claimed in any one of Claims 5 to 7, **characterised in that** the opening (7) is disposed so as to extend from the lateral widened portion (8) to the shoulder (5).

9. Adapter as claimed in any one of Claims 1 to 8, **characterised in that** the opening (7) is constructed so as to reach as far as the upper long edge of the underside of the external housing (1).

10. Adapter as claimed in any one of Claims 1 to 9, **characterised in that** the opening (7) has a height corresponding to that of the insertion channel (3).

11. Adapter as claimed in any one of Claims 1 to 10, **characterised in that** the insertion channel (3) is disposed flush with the upper edge of the underside of the external housing (1).

## Revendications

1. Adaptateur pour le contact d'éléments au format carte porteurs de composants électroniques, lequel adaptateur possède un raccord pour un système de traitement de données et se compose d'un boîtier extérieur (1) en forme de carte à insérer, qui possède sur une première face frontale une prise de connexion (2) et sur la deuxième face frontale opposée l'ouverture d'un canal d'insertion (3) destiné à recevoir un élément porteur au format carte (13),
dans lequel une carte de circuits (16), en liaison électrique avec la prise de connexion (2) et munie d'éléments de contact (17) pour le contact avec les composants électroniques de l'élément porteur (13), est disposée dans le boîtier extérieur (1),
dans lequel le boîtier extérieur (1) est ouvert sur l'un de ses deux côtés longitudinaux dans une courte zone (12) faisant suite à la première face frontale présentant l'ouverture du canal d'insertion (3), et
dans lequel l'autre côté longitudinal du boîtier extérieur (1) faisant face à ce côté longitudinal est pourvu d'une ouverture (7) à travers laquelle l'élément porteur (13) peut dépasser dans le canal d'insertion (3) si l'élément porteur (13) est introduit en biais,
**caractérisé en ce que** les deux côtés longitudinaux du boîtier extérieur (1) créent des surfaces d'appui et de guidage pour l'élément porteur (13).

2. Adaptateur selon la revendication 1, **caractérisé en ce que** le raccordement au système de traitement de données est conçu selon le standard PCMCIA.

3. Adaptateur selon la revendication 1 ou 2, **caractérisé en ce que** la face inférieure du boîtier extérieur (1) dans la zone d'insertion de l'élément porteur (13) est dégagée ou allongée en forme de lèvre inférieure (11).

4. Adaptateur selon la revendication 3, **caractérisé en ce qu'**au moins une came de serrage (15) est disposée sur la lèvre inférieure dégagée (11).

5. Adaptateur selon l'une quelconque des revendications 1 à 4, **caractérisé en ce que** la face inférieure et/ou supérieure du boîtier extérieur (1) est pourvue d'un coude (5) au niveau de la prise de connexion (2).

6. Adaptateur selon l'une quelconque des revendications 1 à 5, **caractérisé en ce que** le boîtier extérieur (1) présente sur son côté longitudinal faisant face à la zone ouverte (12) un élargissement latéral (6).

7. Adaptateur selon la revendication 6, **caractérisé en ce que** l'extension de l'élargissement latéral (6) dans le sens longitudinal du boîtier extérieur (1) va de la face frontale possédant l'ouverture du canal d'insertion (3) jusqu'à l'extrémité frontale du côté longitudinal fermé (8) opposé orientée vers le canal d'insertion (3).

8. Adaptateur selon l'une quelconque des revendications 5 à 7, **caractérisé en ce que** l'ouverture (7) s'étend de l'élargissement latéral (6) jusqu'au coude (5).

9. Adaptateur selon l'une quelconque des revendications 1 à 8, **caractérisé en ce que** l'ouverture (7) va jusqu'au bord longitudinal de la face inférieure du boîtier extérieur (1).

10. Adaptateur selon l'une quelconque des revendications 1 à 9, **caractérisé en ce que** l'ouverture (7) a une hauteur correspondant à celle du canal d'insertion (3).

11. Adaptateur selon l'une quelconque des revendications 1 à 10, **caractérisé en ce que** le canal d'insertion (3) est disposé de niveau avec le bord supérieur du côté inférieur du boîtier extérieur (1).
